# EUROPEAN PATENT APPLICATION

(11) **EP 1 885 107 A1**
(43) Date of publication of application: **06.02.2008**
(21) Application number: 06118455.2
(22) Date of filing: 04.08.2006
(51) Int. Cl.: H04M 1/60, H04M 1/725, G01C 21/36, H04M 1/247

(54) **Mobile terminal control by vehicle**

(71) Applicant: Sysopen Digia Oyj, 00380 Helsinki (FI)
(72) Inventor: Kölbl, Wolfgang, 01900, Nurmijärvi (FI); Tulonen, Kai, 02940, Espoo (FI)
(74) Representative: Pykälä, Timo Tapani

(57) **Abstract**

An apparatus for a vehicle, a vehicle, a computer program for a vehicle, an apparatus for a mobile terminal, a computer program for a mobile terminal, and a method are described. The method relates to a mobile terminal control by a vehicle. The method includes: presenting (210) visual data originating from the mobile terminal with a display of the vehicle; and transmitting (214) command data originating from a user input device of the vehicle to the mobile terminal.

## Description

### Field

The invention relates to an apparatus for a vehicle, a vehicle, a computer program for a vehicle, an apparatus for a mobile terminal, a computer program for a mobile terminal, and a method.

### Background

Mobile terminals and their displays are quite small. As a result of this, operating a mobile terminal while driving requires special attention. When the driver concentrates on operating the mobile terminal, he or she cannot fully focus on driving. This poses a security risk for the driver, passengers and other people on the road.

Hands-free car-kits for mobile terminals solve some of these problems. However, receiving or making a call, or operating the mobile terminal in some other way (reading or sending e-mail or text messages, checking calendar, or using navigation software, etc.) requires the driver to look closely at the screen of the mobile terminal and to operate the keyboard of the mobile terminal.

### Brief description

The present invention seeks to provide an improved apparatus for a vehicle, an improved vehicle, an improved computer program for a vehicle, an improved apparatus for a mobile terminal, an improved computer program for a mobile terminal, and an improved method.

According to an aspect of the present invention, there is provided an apparatus for a vehicle as specified in claim 1.

According to another aspect of the present invention, there is provided a vehicle as specified in claim 8.

According to another aspect of the present invention, there is provided a computer program for a vehicle as specified in claim 9.

According to another aspect of the present invention, there is provided an apparatus for a mobile terminal as specified in claim 10.

According to another aspect of the present invention, there is provided a computer program for a mobile terminal as specified in claim 18.

According to another aspect of the present invention, there is provided a method as specified in claim 19.

According to an aspect of the present invention, there is provided an apparatus for a vehicle as specified in claim 29.

According to another aspect of the present invention, there is provided an apparatus for a mobile terminal as specified in claim 30.

### List of drawings

Embodiments of the present invention are described below, by way of example only, with reference to the accompanying drawings, in which
Figure 1 illustrates embodiments of a vehicle and a mobile terminal; and
Figure 2 illustrates embodiments of a method.

### Description of embodiments

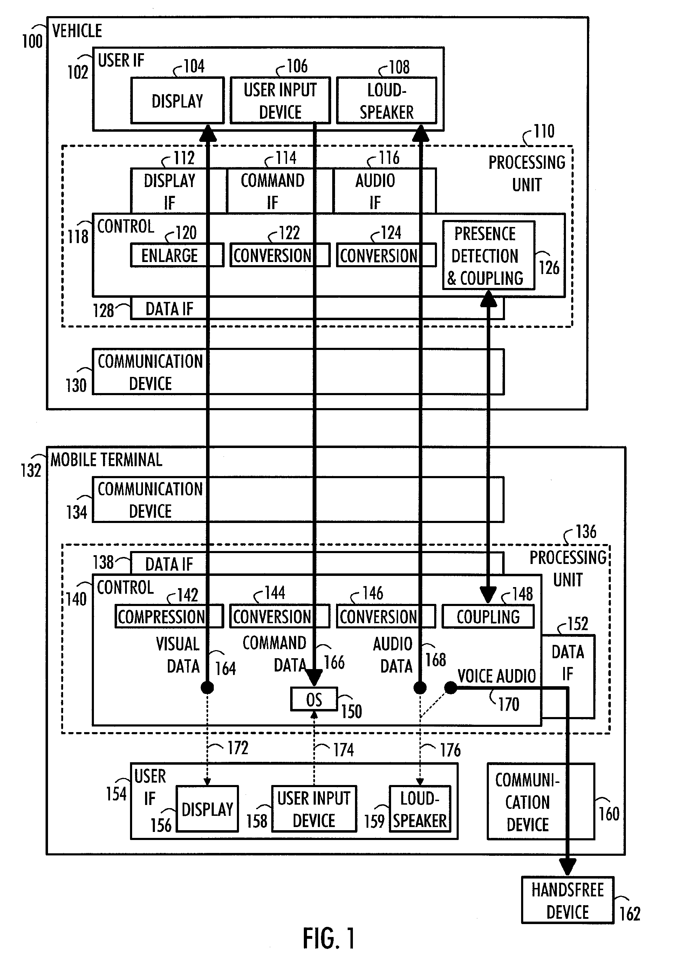

With reference to Figure 1, let us examine embodiments of a vehicle 100 and a mobile terminal 132.

The vehicle 100 refers to any means in or by which someone travels. The vehicle 100 may be an automobile, driven by a driver, for example. The automobile carries its own power-generating and propelling mechanism. The vehicle 100 comprises an apparatus for the vehicle 100, which may be a part of the integrated control system of the vehicle. The apparatus for the vehicle 100 may as well be coupled or coupleable with the integrated control system of the vehicle 100.

The integrated control system of the vehicle 100 may be implemented as at least one electronic digital computer, which may comprise a working memory (RAM), a central processing unit (CPU), and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions. An embodiment provides a computer program comprising program instructions, which, when loaded into a processing unit 110 integrated into the vehicle 100, constitute at least some of the modules 112, 114, 116, 118, 120, 122, 124, 126 and 128, described later in detail.

The computer program may be in source code form, object code form, or in some intermediate form, and it may be stored in some sort of carrier, which may be any entity or device capable of carrying the program. Such carriers include a record medium, a computer memory, a read-only memory, an electrical carrier signal, a telecommunications signal, and a software distribution package, for example. Depending on the processing power needed, the computer program may be executed in a single electronic digital computer or it may be distributed amongst a number of computers.

Some or all of the modules 112, 114, 116, 118, 120, 122, 124, 126 and 128 may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus for the vehicle 100, necessary processing capacity, production costs, and production volumes, for example.

The apparatus for the vehicle 100 comprises three interface modules: a data interface module 128 configured to transmit data to and from a mobile terminal 132, a display interface module 112 configured to present visual data 164 with a display 104 of the vehicle 100, and a command interface module 114 configured to receive command data 166 from a user input device 106 of the vehicle 100. These interface modules may be implemented with the suitable interface technologies, such as a message interface, a method interface, a sub-routine call interface, a block interface, or any means enabling the communication between functional sub-units. The display interface 112 and the command interface 114 may use hardware connecting the user interface 102 of the vehicle 100 with the processing unit 110; the hardware may be a part of the wiring of the vehicle 100, or a communications bus of the vehicle, for example. The data interface 128 may utilize a communication device 130 for the communication with the mobile terminal 132. The communication device 130 may include any means, wired or wireless, implementing data communication between two devices. Such means include a Bluetooth transceiver, Universal Serial Bus (USB) device, a TCP/IP (Transmission Control Protocol / Internet Protocol) device, a WLAN (Wireless Local Area Network) device, etc.

The display 104 and the user input device 106 belong to a user interface 102 of the vehicle 100. The display 104 may belong to an instrument panel of the vehicle 100, or it may be a part of an entertainment system of the vehicle 100, for example. Other ways to implement the display 104 are also possible, such as a display projected on a windscreen of the vehicle 100, i.e. a military jet-style digital Heads-Up Display (HUD). The display 100 may be implemented as a touch-screen as well, thus forming the user input device 106 at the same time. The user input device 106 may be implemented with other ways to implement the driver interaction with the vehicle 100 as well. Such ways include the following, for example: buttons on the steering wheel, buttons on the instrument panel, etc.

The apparatus for the vehicle 100 further comprises a control module 118, which is coupled with the data interface module 128, display interface module 112 and command interface module 114. The control module 118 is configured to present visual data 164 originating from the mobile terminal 132 with the display 104 of the vehicle 100. The control module 118 is also configured to transmit command data 166 originating from the user input device 106 of the vehicle 100 to the mobile terminal 132.

In effect, the vehicle 100 operates as a remote control for the mobile terminal 132. The driver of the vehicle 100 may concentrate on the traffic and at the same time operate the mobile terminal 132, as the mobile terminal 132 becomes a part of the integrated control system of the vehicle 100. In the automobile industry, for example, there reigns a very high standard for the safety testing of the integrated control system. The driver must be able to control the vehicle 100 with a minimum of distraction. As the mobile terminal 132 kind of becomes a part of the vehicle 100, this translates into safe remote controlling of the mobile terminal 132 with the vehicle 100.

The control module 118 may further be configured to present a screen image of the mobile terminal 132 as visual data 164. As a display 156 of the mobile terminal 156 may be quite small as compared to the display 104 of the vehicle 100, the control module 118 may further be configured to enlarge 120 the screen image before presenting it with the display 104 of the vehicle 100. This further facilitates the use of the mobile terminal 132 while driving the vehicle 100. The visual data 164 may refer to any visual data meant for a display 156 of the mobile terminal 132.

Considering that the research and development of mobile terminals 132 is a technical area very remote from the research and development of vehicles 100, it is well understood that the interoperability between the mobile terminal 132 and the vehicle 100 may necessitate some fitting. The control module 118 may further be configured to convert the command data 166 into a format understood by the mobile terminal 132. One way of accomplishing this is to further configure the control module 118 to convert 122 an event included in the command data 166 into a key-event of the mobile terminal 132. The key-event refers to an event created as a response to the user manipulation of a user input device 158 of the mobile terminal 158. The user input device 158 of the mobile terminal 132 may include any means to implement the user interaction, such as a touch-screen, a keyboard, a keypad, buttons, a pointing device, etc.

As a fourth interface module, the apparatus for the vehicle 100 may further comprise an audio interface module 116 to present audio data with a loudspeaker 108 of the vehicle 100. The control module 118 may further be coupled with the audio interface module 116. The control module 118 may further be configured to present audio data 168, other than voice audio data 170 of a phone call, and originating from the mobile terminal, with the loudspeaker 108 of the vehicle 100. The loudspeaker 108 refers to any means reproducing sound. The loudspeaker 108 may also be a part of the entertainment system of the vehicle 100. The audio data 168 refers to any audio data other than the voice audio data 170 of the phone call. Such audio data 168 includes warning sounds generated by the mobile terminal 132, notifications about new messages, navigation system instructions, and any other audio data generated by the mobile terminal 132 and meant to be reproduced by a loudspeaker 159 of the mobile terminal 132. The control module 118 may further be configured to convert 124 the audio data format of the mobile terminal 132 into another audio data format used by the vehicle 100. The voice audio 170 of the phone call may be handled with a conventional hands-free device 162, i.e. the voice audio 170 of the phone call is transmitted through a data interface module 152 and a communication device 160 between the mobile terminal 132 and the hands-free device 162. The hands-free device 162 may be a Bluetooth earpiece for the mobile terminal, for example.

The control module 118 may further be configured to detect 126 the presence of the mobile terminal 132 automatically, and to couple 126 the mobile terminal 132 with the apparatus for the vehicle 100. This facilitates the use of the mobile terminal 132 with the vehicle 100 considerably. The driver may enter the vehicle 100 having the mobile terminal 132 in his or her pocket or suitcase, for example. He or she may then operate the mobile terminal 132 after it has been detected and coupled with the vehicle 100, without even taking it out from the pocket or suitcase. The mobile terminal 132 may also be placed in some other place, such as a glove compartment, where it may be safely stored, but still it is possible to remote control the mobile terminal 132 with the user interface 102 of the vehicle 100. The data connection between the vehicle 100 and mobile terminal 132 is then wireless. If the data connection is wired, the mobile terminal 132 needs to be mechanically connected with the communication device 130 of the vehicle 100.

The mobile terminal 132 refers to a wireless mobile communication device operating with or without a subscriber identification module (SIM), including, but not limited to, the following types of devices: mobile phone, Smartphone, personal digital assistant (PDA), handset. The wireless connection may be implemented with a wireless transceiver operating according to the GSM (Global System for Mobile Communications), WCDMA (Wideband Code Division Multiple Access), WLAN (Wireless Local Area Network) or Bluetooth® standard, or another wireless communication means.

The mobile terminal 132 comprises an apparatus for the mobile terminal 132, which may be a part of the integrated processing system of the mobile terminal 132. The apparatus for the mobile terminal 132 may as well be coupled or coupleable with the integrated processing system of the mobile terminal 132. The apparatus for the mobile terminal 132 may be implemented in the ways described for the implementation of the apparatus for the vehicle 100, i.e. as software and/or hardware. An embodiment provides a computer program comprising program instructions, which, when loaded into a processing unit 136 integrated into the mobile terminal 132, constitute at least some of the modules 138, 140, 142, 144, 146 and 148.

The apparatus for the mobile terminal 132 comprises two modules: a data interface module 138 and a control module 140. The data interface module 138 is configured to transmit data to and from the vehicle 100. The control module 140 is coupled with the data interface module 138. The control module 140 is configured to transmit visual data 164 to the vehicle 100. The control module 140 is also configured to receive command data 166 originating from the user input device 106 of the vehicle 100.

The control module 140 may further be configured to present a screen image of the mobile terminal 132 as visual data 164. The control module 140 may further be configured to compress the visual data 164 before the transmission to the vehicle 100. One way of achieving the compression is to further configure the control module 140 to analyze a screen image of the mobile terminal 132 and to transmit only changes in visual data 164 between successive screen images to the vehicle 100.

The control module 140 may further be configured to convert the command data 166 into a format understood by an operating system 150 of the mobile terminal. The control module 140 may further be configured to convert an event included in the command data 166 into a key-event of the mobile terminal 132. The control module 140 may even be configured to mask an event included in the command data 166 as an event originating from a user input device 158 of the mobile terminal 132. The mobile terminal 132 may then behave in a normal way, i.e. no modifications are needed for the applications, as everything appears as if the user had actually operated the mobile terminal 132 through its own user interface 154.

The data interface module 138 may utilize a communication device 134 that is a counterpart of the communication device 130 of the vehicle 100. Consequently, the communication device 134 may be implemented in the same way as the communication device 130.

The control module 140 may further be configured 148 to interoperate with the coupling function 126, and possibly also with the automatic presence detection function 126, which both were described earlier in connection with the vehicle 100.

It is worth noting that Figure 1 illustrates various conversions 120, 122, 124, 142, 144 and 146 as residing in both the vehicle 100 and the mobile terminal 132. Naturally, any one of these conversions, relating to the visual data 164, command data 166 and audio data 168, may also be implemented so that it only resides in either the vehicle 100 or the mobile terminal 132. The vehicle 100 and/or the mobile terminal 132 may each use their own formats, in which case a conversion is needed in either end. If a common data interchange format is used, then the conversions may be needed in both ends, as the internal format has to be converted to the interchange format and vice versa.

Figure 1 also illustrates how the mobile terminal 132 in normal operation, without utilizing the vehicle 100, is operated: visual data is displayed 172 in a display 156 of the mobile terminal 132, command data is received 174 from a user input device 158 of the mobile terminal, and audio data (including voice audio of a phone call) is outputted 176 through a loudspeaker 159 of the mobile terminal 132.

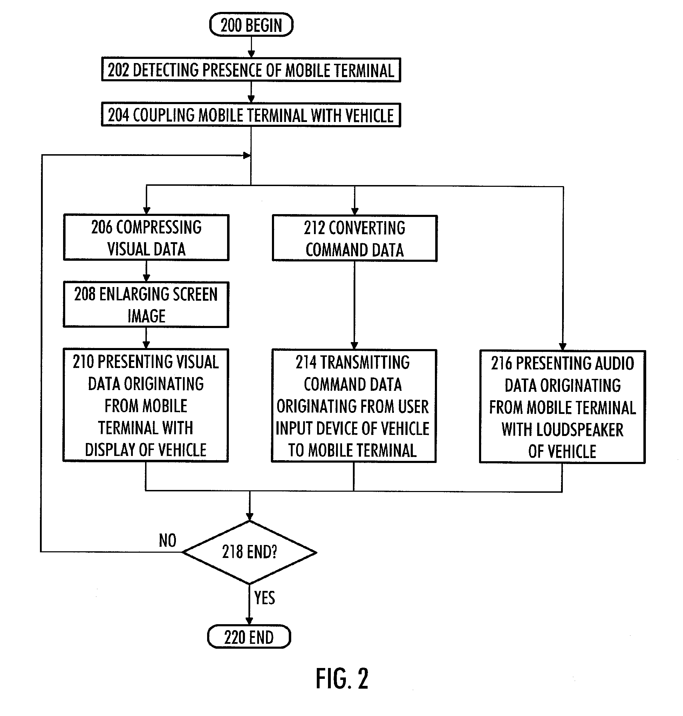

Embodiments of a method will next be described with reference to Figure 2. The method relates to mobile terminal control by a vehicle. The method starts in 200. In 202, the presence of a mobile terminal may be detected automatically. In 204, the mobile terminal may be coupled with the vehicle.

There may be three parallel sequences, one for visual data, another one for command data, and a third one for audio data. These sequences may run in parallel so that the processing units of the vehicle and mobile terminal utilize process swapping, threads, or some other technique for implementing parallel processing. The underlying idea may be that each sequence gets a processing time slice in turn.

In the first sequence, visual data originating from the mobile terminal is presented with a display of the vehicle in 210. A screen image of the mobile terminal may be presented as visual data. In 206, the visual data may be compressed for the transmission to the vehicle. One way to implement the compression is by analyzing a screen image of the mobile terminal, included in the visual data, and transmitting only changes in visual data between successive screen images to the vehicle. In 208, the screen image may be enlarged before presenting the visual data with the display of the vehicle.

In the second sequence, command data originating from a user input device of the vehicle is transmitted to the mobile terminal in 214. In 212, the command data may be converted into a format understood by the mobile terminal. This may be achieved by masking an event included in the command data as an event originating from a user input device of the mobile terminal, or by converting an event included in the command data into a key-event of the mobile terminal.

In the third sequence, audio data, other than voice audio data of a phone call, and originating from the mobile terminal, may be presented with a loudspeaker of the vehicle in 216.

In 218, it is tested whether the method has ended. Switching off of the mobile terminal, for example, may cause the ending of the method. As a result of the test in 218, the method ends in 220, or it continues from the point after 204.

It should be noted that no special order of operations is required in the method. For example: the command data conversion of 212 may also be performed after the transmission of 214, or the enlargement of 208 may also be performed after the compression of 206.

The formerly described details of the vehicle 100 and the mobile terminal 132 may be applied to the method as well.

Even though the invention has been described above with reference to an example according to the accompanying drawings, it is clear that the invention is not restricted thereto but it can be modified in several ways within the scope of the appended claims.

## Claims

1. An apparatus for a vehicle, comprising:
a data interface module configured to transmit data to and from a mobile terminal;
a display interface module configured to present visual data with a display of a vehicle;
a command interface module configured to receive command data from a user input device of the vehicle; and
a control module, coupled with the data interface module, display interface module and command interface module, configured to present visual data originating from the mobile terminal with the display of the vehicle, and to transmit command data originating from the user input device of the vehicle to the mobile terminal.

2. The apparatus of claim 1, wherein the control module is further configured to present a screen image of the mobile terminal as visual data.

3. The apparatus of claim 2, wherein the control module is further configured to enlarge the screen image before presenting it with the display of the vehicle.

4. The apparatus of any preceding claim, wherein the control module is further configured to convert the command data into a format understood by the mobile terminal.

5. The apparatus of claim 4, wherein the control module is further configured to convert an event included in the command data into a key-event of the mobile terminal.

6. The apparatus of any preceding claim, further comprising an audio interface module to present audio data with a loudspeaker of the vehicle, and the control module is further coupled with the audio interface module and configured to present audio data, other than voice audio data of a phone call, and originating from the mobile terminal, with the loudspeaker of the vehicle.

7. The apparatus of any preceding claim, wherein the control module is further configured to detect the presence of the mobile terminal automatically, and to couple the mobile terminal with the apparatus for the vehicle.

8. A vehicle comprising the apparatus of any preceding claim.

9. A computer program comprising program instructions, which, when loaded into a processing unit integrated in a vehicle, constitute the modules of any preceding claim 1 to 7.

10. An apparatus for a mobile terminal, comprising:
a data interface module configured to transmit data to and from a vehicle:
a control module, coupled with the data interface module, configured to transmit visual data to the vehicle, and to receive command data originating from a user input device of the vehicle.

11. The apparatus of claim 10, wherein the control module is further configured to present a screen image of the mobile terminal as visual data.

12. The apparatus of any preceding claim 10 to 11, wherein the control module is further configured to compress the visual data before the transmission to the vehicle.

13. The apparatus of claim 12, wherein the control module is further configured to analyze a screen image of the mobile terminal, included in the visual data, and to transmit only changes in visual data between successive screen images to the vehicle.

14. The apparatus of any preceding claim 10 to 13, wherein the control module is further configured to convert the command data into a format understood by an operating system of the mobile terminal.

15. The apparatus of claim 14, wherein the control module is further configured to convert an event included in the command data into a key-event of the mobile terminal.

16. The apparatus of any preceding claim 10 to 15, wherein the control module is further configured to mask an event included in the command data as an event originating from a user input device of the mobile terminal.

17. A mobile terminal comprising the apparatus of any preceding claim 10 to 16.

18. A computer program comprising program instructions, which, when loaded into a processing unit integrated in a mobile terminal, constitute the modules of any preceding claim 10 to 16.

19. A method comprising:
presenting visual data originating from the mobile terminal with a display of the vehicle; and
transmitting command data originating from a user input device of the vehicle to the mobile terminal.

20. The method of claim 19, further comprising: presenting a screen image of the mobile terminal as visual data.

21. The method of claim 20, further comprising: enlarging the screen image before presenting the visual data with the display of the vehicle.

22. The method of any preceding claim 19 to 21, further comprising:
converting the command data into a format understood by the mobile terminal.

23. The method claim 22, further comprising: masking an event included in the command data as an event originating from a user input device of the mobile terminal.

24. The method of claim 22, further comprising: converting an event included in the command data into a key-event of the mobile terminal.

25. The method of any preceding claim 19 to 24, further comprising: presenting audio data, other than voice audio data of a phone call, and originating from the mobile terminal, with a loudspeaker of the vehicle.

26. The method of any preceding claim 19 to 25, further comprising:
detecting the presence of the mobile terminal automatically, and coupling the mobile terminal with the vehicle.

27. The method of any preceding claim 19 to 26, further comprising:
compressing the visual data for the transmission to the vehicle.

28. The method claim 27, further comprising: analyzing a screen image of the mobile terminal, included in the visual data, and transmitting only changes in visual data between successive screen images to the vehicle.

29. An apparatus for a vehicle, comprising:
means for transmitting data to and from a mobile terminal;
means for presenting visual data with user interface means of a vehicle;
means for receiving command data from the user interface means of the vehicle;
means for presenting visual data originating from the mobile terminal with the user interface means of the vehicle; and
means for transmitting command data originating from the user interface means of the vehicle to the mobile terminal.

30. An apparatus for a mobile terminal, comprising:
means for transmitting data to and from a vehicle:
means for transmitting visual data to the vehicle; and
means for receiving command data originating from user interface means of the vehicle.
